# EUROPÄISCHE PATENTSCHRIFT

(11) **EP 1 680 306 B1**
(45) Veröffentlichungstag und Bekanntmachung des Hinweises auf die Patenterteilung: **17.08.2011**
(21) Anmeldenummer: 04765348.0
(22) Anmeldetag: 17.09.2004
(51) Int. Cl.: B60R 9/04

(54) **DACHRELING FÜR EIN FAHRZEUG**
ROOF RACK FOR A VEHICLE
GALERIE DE TOIT POUR UN VEHICULE

(30) Priorität: 24.10.2003 DE 10350288
(43) Veröffentlichungstag der Anmeldung: 19.07.2006
(73) Patentinhaber: Hans und Ottmar Binder GmbH Oberflächenveredelung, 89558 Böhmenkirch (DE)
(72) Erfinder: BINDER, Hans, 89558 Böhmenkirch (DE); BINDER, Ottmar, 89558 Böhmenkirch (DE)
(74) Vertreter: Grosse, Rainer
(86) Internationale Anmeldenummer: PCT/EP2004/010455
(87) Internationale Veröffentlichungsnummer: WO 2005/049379

(56) Entgegenhaltungen:
- EP-A- 1 059 204
- DE-C1- 4 341 619
- DE-C1- 4 422 421
- DE-U1- 29 700 637
- US-B2- 6 592 176

## Beschreibung

Die Erfindung betrifft eine Dachreling für ein Fahrzeug, mit mindestens einem, sich im Wesentlichen in einem Abstand zur Dachfläche des Fahrzeugs erstreckenden, rohrförmigen Holm und zwei Stützen an den Holmenden zum Befestigen der Dachreling auf dem Fahrzeugdach.

Es ist bekannt, eine Dachreling für Fahrzeuge aus je einem Holm an jeder Dachseite des Fahrzeugs auszubilden. Jeder Holm trägt in seinen Endbereichen Stützfüße, die ihrerseits am Fahrzeug festlegbar sind. Eine ähnliche Dachreling ist durch der DE 43 41 619 C1 offenbart.

Aufgabe der Erfindung ist es, eine einfache, hochbelastbare Dachreling zu schaffen.

Zur Lösung dieser Aufgabe ist erfindungsgemäß vorgesehen, dass der Holm an den Endbereichen jeweils mit einer Abbiegung ausgebildet ist und im Bereich jeder Abbiegung von einer am Holm befestigten Stütze untergriffen ist, deren Oberseite -im Querschnitt gesehen- eine ebene Abstützfläche für eine Gegenfläche des Holms bildet. Insbesondere ist vorgesehen, dass die Gegenfläche -im Querschnitt betrachtet- ebenfalls eben ausgebildet ist.

Im Längsschnitt betrachtet verläuft die Oberseite der Stütze vorzugsweise bogenförmig, insbesondere konvex bogenförmig. Vorzugsweise ist eine entsprechende Formgebung bei der Gegenfläche vorgesehen, d.h., diese verläuft -im Längsschnitt betrachtet- entsprechend bogenförmig, insbesondere konkav bogenförmig.

Vorzugsweise kann vorgesehen sein, dass die Stütze einen Haltevorsprung aufweist, der in das Innere des rohrförmigen Holms, insbesondere in das Stirnende des rohrförmigen Holms, eingreift. Dabei kann bevorzugt das Querschnittsprofil des Haltevorsprungs dem Holraum-Querschnittsprofil des rohrförmigen Holms formangepasst ausgebildet sein. Hierdurch ist es möglich, auf den Holm wirkende Verdrehkräfte problemlos aufzunehmen und ferner auch in Längsrichtung der Dachreling auftretende Kräfte direkt in die entsprechende Stütze einzuleiten.

Insbesondere ist es vorteilhaft, wenn der Holm im Übergangsbereich von einer der Stütze zugeordneten Zone zur einer stützenfreien Zone eine Stufe aufweist, die von einem Abschnitt der Stütze hintergriffen wird. Dieser Hintergriff sorgt zusätzlich zur Abstützung des Holms in Holmlängsrichtung und trägt daher zur Festigkeit der Dachreling bei.

Insbesondere ist vorgesehen, dass die Stütze mit dem Holm mittels mindestens einer Gewindeschraube verschraubt ist, wobei der Schraubenkopf der Gewindeschraube in einer Aufnahme der Stütze liegt. Die Aufnahme sorgt dafür, dass der Schraubenkopf versenkt liegt. Mittels mindestens einem als Befestigungsschraube ausgebildeten Befestigungsmittel ist die Stütze am Fahrzeugdach befestigt. Hierzu wird die Befestigungsschraube in eine Gewindebohrung der Stütze eingeschraubt, wobei sie eine Tragstruktur am Fahrzeugdach durchgreift und auf diese Art und Weise einen festen Sitz herstellt.

Bevorzugt kann vorgesehen sein, dass die Stütze sich aus mindestens zwei Teilen zusammensetzt, und zwar einer Aufnehmerplatte und ein die Gegenfläche aufweisendes Halteelement.

Ferner weist die Halteplatte den Haltevorsprung einstückig auf oder letzterer ist an der Aufnehmerplatte befestigt.

Die Zeichnungen veranschaulichen die Erfindung anhand zweier Ausführungsbeispiele und zwar zeigt:
- Figur 1: eine perspektivische Explosionsdarstellung einer Dach- reling im Bereich ihres Endes mit einer Stütze und
- Figur 2: eine der Figur 1 entsprechende Darstellung einer weite- ren Ausführungsform einer Dachreling.

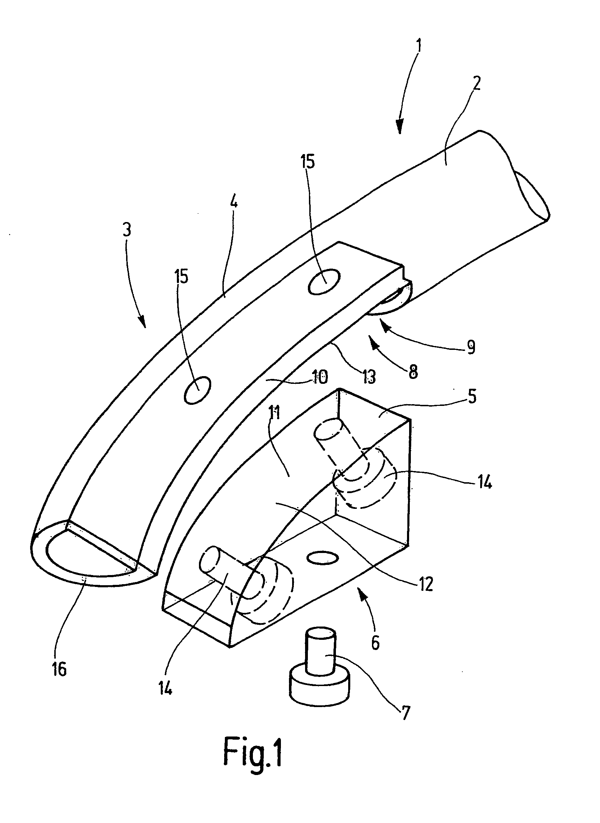

Die Figur 1 zeigt einen Teil einer Dachreling 1, wobei nur ein Endbereich dargestellt ist, der an einem nicht dargestellten Fahrzeug befestigt werden kann. Der andere, gegenüberliegende Endbereich der Dachreling 1 ist in entsprechender Weise ausgestaltet, so dass es ausreicht, nachstehend nur einen Endbereich zu beschreiben. Die Dachreling 1 weist ein sich im Wesentlichen in einem Abstand zur Dachfläche des Fahrzeugs erstreckenden, rohrförmigen Holm 2 auf, der bevorzugt als Hohlprofil ausgebildet ist. Für die Erstellung der kompletten Dachreling sind zwei derartige Holme vorgesehen, die jeweils an den beiden Seitenbereichen der Dachfläche des Fahrzeugs befestigt werden. Für die Befestigung weisen die Holme 2 am jeweiligen Endbereich 3 eine Abbiegung 4 in Richtung auf das nicht dargestellte Fahrzeugdach auf. Im Bereich der Abbiegung 4 weist die Dachreling 1 eine Stütze 5 auf, deren Unterseite 6 mit geeigneten Befestigungsmitteln 7 am Fahrzeug befestigbar ist.

Im Bereich der Abbiegung 4 ist an der Unterseite 8 des Holms 2 eine Ausklinkung in Form einer Stufe 9 vorgesehen, d.h., hier springt die Unterseite des Holms 2 zurück, um die Stütze 5 aufzunehmen. Da der Holm 2 vorzugsweise als Hohlprofil ausgebildet ist, wird herstellungstechnisch ein entsprechender Innenraumbereich des Hohlprofils mit Material aufgefüllt und anschließend die Stufe 9 herausgearbeitet, so dass die Auflagefläche des Holms 2 zur Stütze 5 als Abstützwand 10 ausgebildet ist.

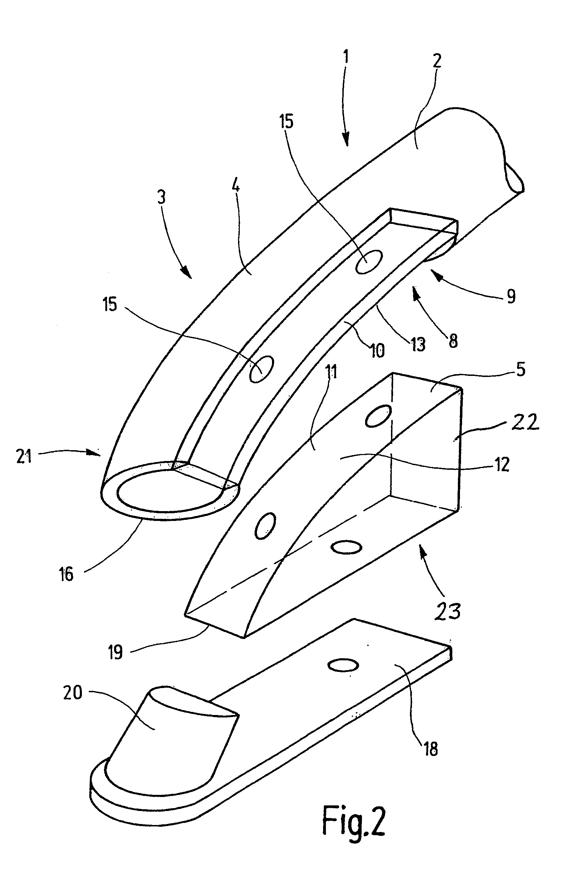

Der Figur 1 ist zu entnehmen, dass die mit der Abstützwand 10 zusammenwirkende Oberseite 11 der Stütze 5 -im Querschnitt betrachtet- eben ausgebildet ist, also eine ebene Abstützfläche 12 bildet. Im Längsschnitt betrachtet weist die Oberseite 11 eine konvex bogenförmige Form auf, d.h., die Abstützfläche 12 ist -in Längsschnittrichtung betrachtet- konvex bogenförmig ausgestaltet. Die an der Unterseite 8 des Holms 2 liegende, mit der Abstützfläche 12 zusammenwirkende Gegenfläche 13 ist formangepasst an die Abstützfläche 12 ausgebildet, d.h., sie ist im Querschnitt betrachtet eben ausgebildet und im Längsschnitt betrachtet konkav bogenförmig gestaltet, so dass Abstützfläche 12 und Gegenfläche 13 im Wesentlichen vollflächig aufeinanderliegen. Zur Befestigung der Stütze 5 sind entsprechende, in Figur 1 nicht näher dargestellte Aufnahmebohrungen (siehe Figur 2) in der Stütze 5 vorgesehen, in die Gewindeschrauben 14 eingebracht sind, die jeweils mit einem entsprechenden Gegengewinde 15 am Holm 2 verschraubt werden. Die Schraubenköpfe der Gewindeschrauben 14 sind versenkt in der Stütze 5 eingelassen.

Die Anordnung ist derart getroffen, dass das Stirnende 16 des Holms 2 -im montierten Zustand- etwa auf Höhe der Unterseite 6 der Stütze 5 liegt, so dass die Abbiegung 4 des Holms 2 die Stütze 5 quasi vollständig bogenförmig übergreift.

Zur Seitenverblendung von Stütze 5 und Holm 2 können entsprechende, nicht dargestellte, dünnwandige Blendelemente vorgesehen sein, die mit geeigneten Befestigungsmitteln anbringbar sind oder angerastet werden.

Die Figur 2 zeigt ein weiteres Ausführungsbeispiel einer Dachreling 1, wobei nachstehend nur auf die Unterschiede zum Ausführungsbeispiel der Figur 1 eingegangen wird. Im Übrigen gelten daher die entsprechenden Ausführungen zum Ausführungsbeispiel der Figur 1 ebenfalls beim Ausführungsbeispiel der Figur 2. Die Stütze 5 weist eine Aufnehmerplatte 18 und ein Halteelement 22 auf. Das Halteelement 22 liegt mit seiner Unterseite 23 im montierten Zustand auf einer Aufnehmerplatte 18 auf, die sich über die vordere Endkante 19 des Halteelements 22 erstreckt und im dort liegenden Bereich einen Haltevorsprung 20 aufweist, der ein Querschnittsprofil aufweist, dass dem Hohlraum-Querschnitts-profil des rohrförmigen Holms 2 im Bereich seines Endes 21 entspricht. Im zusammengebauten Zustand greift daher der Haltevorsprung 20 der Stütze 5 am Stirnende 16 in das Innere des rohrförmigen Holms 2 ein. Durch die entsprechend angepasste Querschnittsprofilierung ist ein Verdrehschutz gewährleistet, so dass in Kombination mit der im Querschnitt ebenen und im Längsschnitt bogenförmigen Auflage zwischen Stütze 5 und Unterseite 8 des Holms 2 eine einfach ausgestaltete, jedoch hoch belastbare Verbindung vorliegt.

## Patentansprüche

1. Dachreling (1) für ein Fahrzeug, mit mindestens einem, sich im Wesentlichen in einem Abstand zur Dachfläche des Fahrzeugs erstreckenden Holm (2) und mindestens zwei Stützen (5) an den Holmenden zum Befestigen der Dachreling (1) an dem Fahrzeugdach, wobei der Holm (2) an den Endbereichen (3) jeweils mit einer Abbiegung (4) ausgebildet ist und im Bereich jeder Abbiegung (4) von der am Holm (2) befestigten Stütze (5) untergriffen ist, deren Oberseite (11) -im Querschnitt gesehen- eine ebene Abstützfläche (12) für eine Gegenfläche (13) des Holms (2) bildet, die -im Querschnitt betrachtet- eben ausgebildet ist, **dadurch gekennzeichnet, daß** die Unterseite des Holms (2) durch Ausbildung einer im Bereich der Abbiegung (4) liegenden Ausklingung (9) zur Aufnahme der Stütze (5) zurückspringt.

2. Dachreling nach Anspruch 1, **dadurch gekennzeichnet, dass** die Stütze (5) einen Haltevorsprung (20) aufweist, der in das Innere des rohrförmigen Holms (2) eingreift.

3. Dachreling nach einem der vorhergehenden Ansprüche, **dadurch gekennzeichnet, dass** der Haltevorsprung (20) in das Stirnende des rohrförmigen Holms (2) eingreift.

4. Dachreling nach einem der vorhergehenden Ansprüche, **dadurch gekennzeichnet, dass** das Querschnittsprofil des Haltevorsprungs (20) dem Hohlraum-Querschnittsprofil des rohrförmigen Holms (2) formangepasst ausgebildet ist.

5. Dachreling nach einem der vorhergehenden Ansprüche, **dadurch gekennzeichnet, dass** -im Längsschnitt betrachtet- die Oberseite (11) der Stütze (5) bogenförmig verläuft.

6. Dachreling nach einem der vorhergehenden Ansprüche, **dadurch gekennzeichnet, dass** -im Längsschnitt betrachtet- die Gegenfläche (13) des Holms (2) bogenförmig verläuft.

7. Dachreling nach einem der vorhergehenden Ansprüche, **dadurch gekennzeichnet, dass** die Oberseite (11) der Stütze (5) konvex bogenförmig verläuft.

8. Dachreling nach einem der vorhergehenden Ansprüche, **dadurch gekennzeichnet, dass** die Gegenfläche (13) des Holms (2) konkav bogenförmig verläuft.

9. Dachreling nach einem der vorhergehenden Ansprüche, **dadurch gekennzeichnet, dass** der Holm (2) im Übergangsbereich von einer der Stütze (5) zugeordneten Zone zu einer stützenfreien Zone eine Stufe (9) aufweist, die von einem Abschnitt der Stütze (5) hintergriffen wird.

10. Dachreling nach einem der vorhergehenden Ansprüche, **dadurch gekennzeichnet, dass** die Stütze (5) mit dem Holm (2) mittels mindestens einer Gewindeschraube (14) verschraubt ist.

11. Dachreling nach einem der vorhergehenden Ansprüche, **dadurch gekennzeichnet, dass** der Schraubenkopf der Gewindeschraube (14) in einer Aufnahme der Stütze (5) lagert.

12. Dachreling nach einem der vorhergehenden Ansprüche, **dadurch gekennzeichnet, dass** die Stütze (5) eine Aufnehmerplatte (18) aufweist, auf der ein die Gegenfläche (13) aufweisendes Halteelement (22) befestigt ist und die den Haltevorsprung (20) aufweist.

## Claims

1. Roof rack (1) for a vehicle having at least one rail (2) extending essentially at a distance from the roof surface of the vehicle and at least two supports (5) at the ends of the rail to attach the roof rack (1) to the vehicle roof, where the rail (2) is shaped to have a curve (4) in the end areas (3) and in the area of each curve (4) is held from below by the support (5), which is attached to the rail (2), the topside (11) of said support - when viewed in cross-section - forming a flat supporting surface (12) for a matching surface (13) of the rail (2), which - when viewed in cross-section - is flat, **characterized in that** the underside of the rail (2) forms a recess (9) which is located in the area of the curve (4) to receive the support (5).

2. Roof rack from claim 1, **characterized in that** the support (5) has a retaining projection (20) which engages the interior of the tubular rail (2).

3. Roof rack from one of the preceding claims, **characterized in that** the retaining projection (20) engages the end of the tubular rail (2).

4. Roof rack from one of the preceding claims, **characterized in that** the cross-sectional profile of the retaining projection (20) is configured to match the shape of the internal cross-sectional profile of the tubular rail (2).

5. Roof rack from one of the preceding claims, **characterized in that** the top side (11) of the support (5) is arcuate when viewed in longitudinal section.

6. Roof rack from one of the preceding claims, **characterized in that** the matching surface (13) of the rail (2) is arcuate when viewed in longitudinal section.

7. Roof rack from one of the preceding claims, **characterized in that** the top side (11) of the support (5) runs in a convex arc.

8. Roof rack from one of the preceding claims, **characterized in that** the matching surface (13) of the rail (2) runs in a concave arc.

9. Roof rack from one of the preceding claims, **characterized in that** the rail (2) has a step (9) which is engaged from behind by a section of the support (5) in the transition from a zone allocated to the support (5) to a support-free zone.

10. Roof rack from one of the preceding claims, **characterized in that** the support (5) is bolted to the rail (2) by means of at least one threaded bolt (14).

11. Roof rack from one of the preceding claims, **characterized in that** the head of the threaded bolt (14) is carried in a receptacle of the support (5).

12. Roof rack from one of the preceding claims, **characterized in that** the support (5) has a receiver plate (18) to which a retaining element (22) with the matching surface (13) is attached and which has the retaining projection (20).

## Revendications

1. Barre de toit (1) pour un véhicule comprenant au moins un longeron (2) s'étendant essentiellement à une distance de la surface de toit du véhicule et au moins deux montants (5) aux extrémités de longeron pour fixer la barre de toit (1) au toit de véhicule, dans laquelle le longeron (2) est réalisé à chaque fois avec une courbure (4) au niveau des régions d'extrémité (3) et est accroché par le bas dans la région de chaque courbure (4) par le montant (5) fixé au longeron (2) dont le côté supérieur (11) forme une surface d'appui plane (12), vue en coupe transversale, pour une surface conjuguée (13) du longeron (2) qui est réalisée de manière plane, vue en coupe transversale, **caractérisée en ce que** le côté inférieur du longeron (2) recule par réalisation d'une encoche (9) se situant dans la région de la courbure (4) en vue de la réception du montant (5).

2. Barre de toit selon la revendication 1, **caractérisée en ce que** le montant (5) présente une saillie de maintien (20) qui s'engrène à l'intérieur du longeron tubulaire (2).

3. Barre de toit selon l'une quelconque des revendications précédentes, **caractérisée en ce que** la saillie de maintien (20) s'engrène dans l'extrémité frontale du longeron tubulaire (2).

4. Barre de toit selon l'une quelconque des revendications précédentes, **caractérisée en ce que** le profil en section transversale de la saillie de maintien (20) est réalisé avec une forme adaptée au profil en section transversale de l'espace creux du longeron tubulaire (2).

5. Barre de toit selon l'une quelconque des revendications précédentes, **caractérisée en ce que** le côté supérieur (11) du montant (5) s'étend en forme d'arc, vu en coupe longitudinale.

6. Barre de toit selon l'une quelconque des revendications précédentes, **caractérisée en ce que** la surface conjuguée (13) du longeron (2) s'étend en forme d'arc, vue en coupe longitudinale.

7. Barre de toit selon l'une quelconque des revendications précédentes, **caractérisée en ce que** le côté supérieur (11) du montant (5) s'étend en forme d'arc convexe.

8. Barre de toit selon l'une quelconque des revendications précédentes, **caractérisée en ce que** la surface conjuguée (13) du longeron (2) s'étend en forme d'arc concave.

9. Barre de toit selon l'une quelconque des revendications précédentes, **caractérisée en ce que** le longeron (2) présente un gradin (9) dans la région de transition d'une zone associée au montant (5) à une zone sans montant, gradin qui est accroché par l'arrière par une section du montant (5).

10. Barre de toit selon l'une quelconque des revendications précédentes, **caractérisée en ce que** le montant (5) est vissé avec le longeron (2) au moyen d'au moins une vis filetée (14).

11. Barre de toit selon l'une quelconque des revendications précédentes, **caractérisée en ce que** la tête de vis de la vis filetée (14) est logée dans un logement du montant (5).

12. Barre de toit selon l'une quelconque des revendications précédentes, **caractérisée en ce que** le montant (5) présente une plaque de réception (18) sur laquelle un élément de maintien (22) présentant la surface conjuguée (13) est fixé et qui présente la saillie de maintien (20).
